# EUROPEAN PATENT SPECIFICATION

(11) **EP 2 541 293 B1**
(45) Date of publication and mention of the grant of the patent: **07.05.2014**
(21) Application number: 11171902.7
(22) Date of filing: 29.06.2011
(51) Int. Cl.: G02B 6/38, G02B 6/44

(54) **Adapter mount for fibre connectors with clamping pin received in clamping base**
Adapterträger für Faserstecker mit Klemmpin, der in Klemmbasis empfangen wird
Support adapteur pour des connecteurs à fibres avec broche à serrage reçue dans une base de serrage

(43) Date of publication of application: 02.01.2013
(73) Proprietor: CCS Technology, Inc., Wilmington, DE 19803 (US)
(72) Inventor: Fabrykowski, Grzegorz, 95-010 Strykow (PL); Müller, Michael, 58706 Menden (DE)
(74) Representative: Sturm, Christoph

(56) References cited:
- EP-A1- 0 752 347
- EP-A1- 2 302 430
- EP-B1- 0 740 803
- DE-U1- 29 614 436
- US-A- 5 078 467

## Description

The present patent application relates to a handling device for connections between data transmission cables.

EP 0 740 803 B1 discloses a handling device for connections between data transmission cables, especially for fiber optic connections between fiber optic cables. The handling device disclosed in EP 0 740 803 B1 comprises a fixture and a plurality of adapter modules mounted side by side in a first direction on the fixture. Each adapter module of the prior art handling device is individually removable from the fixture and individually mountable on the fixture. Further on, each adapter module of the prior art handling device comprises a plurality of adapters arranged side by side in a second direction, whereby each adapter is configured to hold connectors and connect data transmission cables at a rear side and a front side of the respective adapter module.

According to EP 0 740 803 B1, each adapter module is movable with respect to the fixture along a line of travel. Releasable locking means can releasable lock each of the adapter modules in any one of a plurality of fixed positions along the line of travel. For removing the adapter modules from the fixture a defined free space above the fixture is needed, namely a space having the dimension at least of the adapter modules. This limits the ability to increase the density of adapters which can be arranged in a defined space.

Removable adapter holders for fixing stack of optical connector adapters on the surface of a support member are known from e.g. EP2302430, EP0740803, and DE29614436U. The fixing of a holder with a protrusion extending from its bottom surface received between the flexible arms of a clamp fixed on the mounting surface is known from EP0752347.

Against this background, the problem to be solved is to provide a novel handling device for connections between data transmission cables.

This problem is solved by a handling device for connections between data transmission cables according to claim 1.

The novel handling device requires a reduced free space above the fixture for removing the adapter modules, namely for providing manual finger access to the adapter modules.

The adapter modules can be removed from the fixture to the side.

It is possible to increase the density of adapters which can be arranged in a defined space.

For mounting an adapter module on the fixture relative low forces are needed.

For removing an adapter module from the fixture higher forces are required.

Preferred embodiments of the handling device are given in the dependent claims and the description below. Exemplary embodiments will be explained in more detail with reference to the drawing, in which:
- Figure 1: shows a perspective view of a novel handling device for connections between data transmission cables;
- Figure 2: shows the detail II of figure 1; and
- Figure 3: shows a perspective view of a basic body of an adaptor module of the handling device.

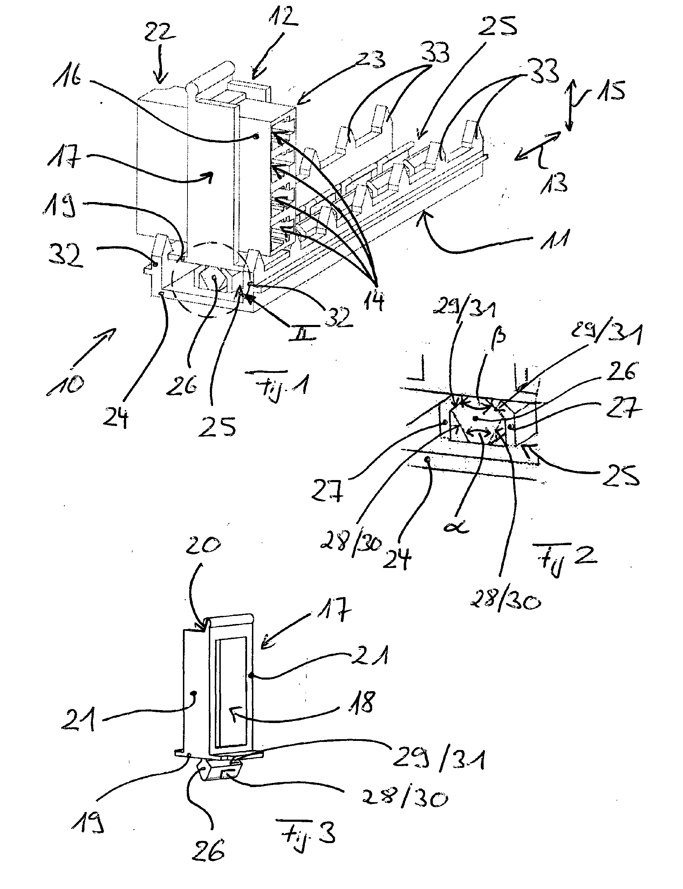

Figure 1 shows a perspective view of a novel handling device 10 for connections between data transmission cables, especially for fiber optic connections between fiber optic cables.

Such a handling device 10 comprises a fixture 11 and a plurality of adapter modules 12. The fixture 11 may comprise one adapter module 12. Figure 1 shows the fixture 11 together with one adapter module 12.

In case of a plurality of adapter modules 12, the plurality of adapter modules 12 are mounted side by side in a first direction 13 on the fixture 11. Each adapter module 12 is individually removable from the fixture 11 and individually mountable on the fixture 11. Each adapter module 12 comprises a plurality of adapters 14 arranged side by side in a second direction 15. The adapter module 12 shown in Figure 1 comprises four adapters 14 having a common adapter housing 16.

It should be noted that each adapter 14 can also comprise an individual adapter housing or that each two adapters 14 can have a common adapter housing. Further on, each adapter module 12 can comprise a single adapter.

The adapters 14 having a common adapter housing 16 or having individual adapter housings are held by a basic body 17 of the respective adapter module 12. The basic body 17 provides an opening 18 (see Figure 3) for receiving the adapters 14. As shown in Figure 3, the opening 18 is surrounded by a bottom wall 19, a top wall 20 and side walls 21 of the basic body 17.

The adapters 14 are configured to hold connectors and connect data transmission cables at a rear side 22 and a front side 23 of the respective adapter module 12.

The fixture 11 of the novel handling device 10 for connections between data transmission cables comprises a mounting surface 24 having a plurality of clamp-like holding elements 25. The bottom wall 19 of each adapter module 12 comprises at least one protrusion 26, whereby the or each protrusion 26 of each adapter module 12 is individually insertable into at least one of the clamp-like holding elements 25 for mounting the respective adapter module 12 on the fixture 11, and whereby the or each protrusion 26 of each adapter module 12 is individually removable from the or each respective clamp-like holding element 25 for removing the respective adapter module 12 from the fixture 11.

In the shown embodiment, each adapter module 12 comprises one protrusion 26 acting together with one clamp-like holding element 25 of the fixture 11. The clamp-like holding elements 25 of the fixture 11 are positioned side by side in the first direction 13 on the mounting surface 24 of the fixture 11.

Each clamp-like holding element 25 of the fixture 11 comprises at least two flexible holding arms 27. The flexible holding arms 27 are angled in such a way that portions of the holding arms being fixed on the mounting surface 24, generally, run generally parallel to each other and that the free ends of the holding arms 27 converge toward each other.

The protrusion 26 of each adapter module 12 comprises at least two sections, namely a first section 28 engaging with the clamp-like holding element 25 of the fixture 11 when mounting an adapter module 12 on the fixture 11 and a second section 29 engaging with the clamp-like holding element 25 of the fixture 11 when removing the adapter module 12 from the fixture 11.

The first section 28 of each protrusion 26 is defined by first faces 30 and the second section 29 of each protrusion 26 is defined by second faces 31, whereby the first faces 30 form an angle α (see Figure 2) being smaller than an angle β formed by the second faces 31. It is possible that a middle section having generally parallel faces may be positioned between the first section 28 and second section 29.

For mounting an adapter module 12 on the fixture 11 relative low forces are needed to outwardly bend or spread apart the flexible holding arms 27 by inserting the respective protrusion 26 into the respective clamp-like holding element 25. For removing an adapter module 12 from the fixture 11 higher forces are required to outwardly bend or spread apart the flexible holding arms 27 by extracting the respective protrusion 26 out of the respective clamp-like holding element 25. This is provided by the different angles α and β enclosed or formed by the faces 30, 31.

The fixture 11 comprises side walls 32 at two opposite sides of the mounting surface 24 of the fixture 11 running in the first direction 13, whereby the side walls 32 comprise protrusions 33. Each two adjacent protrusion 33 on each of the opposite side walls 32 provide a guiding element for an adapter module 12. The guiding element may be funnel-like.

The guiding elements provide a self-centering function for the adapter modules 12 relative to clamp-like holding elements 25 of the fixture 11 when mounting an adapter module 12 on the fixture 11 thereby allowing a defined insertion of a protrusion 26 of the respective adapter module 12 into one of the clamp-like holding elements 25 of the fixture 11.

The guiding elements are provided by faces of the protrusions 33, whereby the faces of each protrusion 33 converge and whereby the faces of adjacent protrusion 33 diverge.

The bottom wall 19 of each adapter module 12, namely of the basic body 17 of each adapter module 12, is dimensioned in such a way that the bottom wall 19 contacts both of the opposite side walls 32 of the fixture 11 when the respective adapter module 12 is mounted on the fixture 11 with the respective protrusion 26 being inserted into the respective clamp-like holding element 25.

The respective adapter module 12 is pivotable with respect to the fixture 11 for removing the same from the fixture 11. When pivoting the respective adapter module 12 with respect to the fixture 11 for removing the same from the fixture 11 a leverage effect is provided by the bottom wall 19 of the adapter module 12 and one of the opposite side walls 32 of the fixture 11 thereby providing the force required for removing an adapter module 12 from the fixture 11. This allows an easy removal of an adapter module 12 from the fixture 11.

### List of reference numerals

- 10: handling device
- 11: fixture
- 12: adapter module
- 13: first direction
- 14: adapter
- 15: second direction
- 16: adapter housing
- 17: basic body
- 18: opening
- 19: bottom wall
- 20: top wall
- 21: side wall
- 22: rear side
- 23: front side
- 24: mounting surface
- 25: clamp-like holding element
- 26: protrusion
- 27: holding arm
- 28: first section
- 29: second section
- 30: first face
- 31: second face
- 32: side wall
- 33: protrusion

## Claims

1. A handling device (10) for connections between data transmission cables, especially for fiber optic connections between fiber optic cables, comprising:
a fixture (11) comprising a mounting surface (24) having a plurality of clamp-like holding elements (25);
a plurality of adapter modules (12) mountable side by side in a first direction on the fixture (11), whereby the or each adapter module (12) is individually removable from the fixture (11) and individually mountable on the fixture (11), whereby the or each adapter module (12) comprises at least one adapter (14), whereby the or each adapter (14) is configured to hold connectors and connect data transmission cables at a rear side and a front side of the respective adapter module (12), whereby the or each adapter module (12) comprises a bottom wall (19) having at least one protrusion (26), whereby the or each protrusion (26) of the respective adapter module (12) is individually insertable into at least one of the clamp-like holding elements (25) for mounting the respective adapter module (12) on the fixture (11), and whereby the or each protrusion (26) of the respective adapter module (12) is individually removable from the or each respective clamp-like holding element (25) for removing the respective adapter module (12) from the fixture;
**characterised in that**
each clamp-like holding element (25) comprises at least two opposite angled and flexible holding arms (27), wherein the holding arms (27) are angled in such a way that portions of the holding arms (27) being fixed to the mounting surface run generally parallel to each other and that free ends of the flexible holding arms (27) converge toward each other; and
the protrusion (26) of the or each adapter module (12) comprises a cross section having at least two sections, namely a first section (28) engaging with the free arms of a clamp-like holding element (25) of the fixture when mounting an adapter module (12) on the fixture (11) and a second section (29) engaging with the free arms of the clamp-like holding element (25) of the fixture when removing the adapter module (12) from the fixture (11), wherein the first section (28) of each protrusion (26) is defined by first faces (30) and that the second section (29) of each protrusion (26) is defined by second faces (31), whereby the second faces (31) defining the second section (29) are positioned between the first faces (30) defining the first section (28) and the bottom wall (19), and whereby the first faces (30) define a smaller angle with each other than the second faces (31).

2. The handling device as claimed in claim 1, **characterised in that** the clamp-like holding elements (25) are positioned side by side in the first direction on the mounting surface (24) of the fixture (11).

3. The handling device as claimed in claim 1 or 2, **characterised in that** the or each adapter module (12) comprises a plurality of adapters (14) arranged side by side in a second direction.

## Patentansprüche

1. Handhabungsgerät (10) für Verbindungen zwischen Datenübertragungskabeln, insbesondere für faseroptische Verbindungen zwischen faseroptischen Kabeln, das Folgendes umfasst:
eine Vorrichtung (11), die eine Montagefläche (24) mit mehreren klemmenartigen Halteelementen (25) umfasst;
mehrere Adaptermodule (12), die nebeneinander in einer ersten Richtung auf der Vorrichtung (11) montiert werden können, wobei das oder jedes Adaptermodul (12) individuell von der Vorrichtung (11) heruntergenommen und individuell auf der Vorrichtung (11) montiert werden kann, wobei das oder jedes Adaptermodul (12) mindestens einen Adapter (14) umfasst, wobei das oder jeder Adapter (14) dafür konfiguriert ist, Verbinder zu halten und Datenübertragungskabel an einer Rückseite und einer Vorderseite des jeweiligen Adaptermoduls (12) zu verbinden, wobei das oder jedes Adaptermodul (12) eine Bodenwand (19) umfasst, die mindestens einen Vorsprung (26) aufweist, wobei der oder jeder Vorsprung (26) des jeweiligen Adaptermoduls (12) einzeln in mindestens eines der klemmenartigen Halteelemente (25) eingeführt werden kann, um das jeweilige Adaptermodul (12) auf der Vorrichtung (11) zu montieren, und wobei der oder jeder Vorsprung (26) des jeweiligen Adaptermoduls (12) einzeln von dem oder jeden jeweiligen klemmenartigen Halteelement (25) abgenommen werden kann, um das jeweilige Adaptermodul (12) von der Vorrichtung abzunehmen;
**dadurch gekennzeichnet, dass**
jedes klemmenartige Halteelement (25) mindestens zwei gegenüberliegende gewinkelte und flexible Haltearme (27) umfasst, wobei die Haltearme (27) in einer solchen Weise gewinkelt sind, dass Abschnitte der Haltearme (27), die an der Montagefläche befestigt sind, allgemein parallel zueinander verlaufen, und dass freie Enden der flexiblen Haltearme (27) zueinander konvergieren; und
der Vorsprung (26) des oder jedes Adaptermoduls (12) einen Querschnitt umfasst, der mindestens zwei Sektionen aufweist, und zwar eine erste Sektion (28), welche die freien Arme eines klemmenartigen Halteelements (25) der Vorrichtung in Eingriff nimmt, wenn ein Adaptermodul (12) an der Vorrichtung (11) montiert wird, und eine zweite Sektion (29), welche die freien Arme des klemmenartigen Halteelements (25) der Vorrichtung in Eingriff nimmt, wenn das Adaptermodul (12) von der Vorrichtung (11) abgenommen wird, wobei die erste Sektion (28) jedes Vorsprungs (26) durch erste Stirnflächen (30) definiert wird, und die zweite Sektion (29) jedes Vorsprungs (26) durch zweite Stirnflächen (31) definiert wird, wobei die zweiten Stirnflächen (31), welche die zweite Sektion (29) definieren, zwischen den ersten Stirnflächen (30), welche die erste Sektion (28) definieren, und der Bodenwand (19) angeordnet sind, und wobei die ersten Stirnflächen (30) miteinander einen kleineren Winkel definieren als die zweiten Stirnflächen (31).

2. Handhabungsgerät nach Anspruch 1, **dadurch gekennzeichnet, dass** die klemmenartigen Halteelemente (25) nebeneinander in der ersten Richtung auf der Montagefläche (24) der Vorrichtung (11) angeordnet sind.

3. Handhabungsgerät nach Anspruch 1 oder 2, **dadurch gekennzeichnet, dass** das oder jedes Adaptermodul (12) mehrere Adapter (14) umfasst, die in einer zweiten Richtung nebeneinander angeordnet sind.

## Revendications

1. Dispositif (10) de manipulation de connexions entre des câbles de transmission de données, notamment de connexions entre des câbles à fibres optiques, le dispositif comprenant :
un agencement (11) qui comprend une surface de montage (24) dotée de plusieurs éléments de maintien (25) de type pince,
plusieurs modules d'adaptateur (12) aptes à être montés côte à côte dans une première direction sur l'agencement (11), le ou tous les modules d'adaptateur (12) pouvant être retirés séparément de l'agencement (11) et être montés séparément sur l'agencement (11), le ou tous les modules d'adaptateur (12) comprenant au moins un adaptateur (14), le ou tous les adaptateurs (14) étant configurés pour retenir des connecteurs et pour connecter des câbles de transmission de données sur le côté arrière et sur le côté avant du module d'adaptateur (12) respectif, le ou tous les modules d'adaptateur (12) comprenant une paroi de fond (19) dotée d'au moins une saillie (26), la ou toutes les saillies (26) du module d'adaptateur (12) respectif pouvant être insérées séparément dans au moins l'un des éléments de maintien (25) de type pince pour monter le module d'adaptateur (12) respectif sur l'agencement (11), la ou toutes les saillies (26) du module d'adaptateur (12) respectif pouvant être retirées séparément du ou de tous les éléments de maintien (25) de type pince pour retirer le module d'adaptateur (12) respectif de l'agencement,
**caractérisé en ce que**
chaque élément de maintien (25) de type pince comprend au moins deux bras de maintien (27) coudés, flexibles et opposés l'un à l'autre, **en ce que** les bras de maintien (27) sont coudés de telle sorte que les parties des bras de maintien (27) fixées sur la surface de montage s'étendent globalement en parallèle l'une à l'autre et que les extrémités libres des bras de maintien (27) flexibles convergent l'une vers l'autre, et
**en ce que** la saillie (26) du ou de tous les modules d'adaptateur (12) présente une section transversale en au moins deux parties, à savoir une première partie (28) qui engage les bras libres d'un élément de maintien (25) de type pince de l'agencement lors du montage d'un module d'adaptateur (12) sur l'agencement (11) et une deuxième partie (29) qui engage les bras libres d'un élément de maintien (25) de type pince de l'agencement lors de l'enlèvement d'un module d'adaptateur (12) hors l'agencement (11), la première partie (28) de chaque saillie (26) étant définie par des premières faces (30) et la deuxième partie (29) de chaque saillie (26) étant définie par des deuxièmes faces (31), les deuxièmes faces (31) définissant la deuxième partie (29) étant disposées entre les premières faces (30) définissant la première partie (28) et la paroi de fond (19), les premières faces (30) formant l'une avec l'autre un angle plus petit que celui formé par les deuxièmes faces (31).

2. Dispositif de manipulation selon la revendication 1, **caractérisé en ce que** les éléments de maintien (25) de type pince sont disposés côte à côte dans la première direction sur la surface de montage (24) de l'agencement (11).

3. Dispositif de manipulation selon les revendications 1 ou 2, **caractérisé en ce que** le ou tous les modules d'adaptateur (12) comprennent plusieurs adaptateurs (14) agencés côte à côte dans une deuxième direction.
